# EUROPÄISCHE PATENTSCHRIFT

(11) **EP 1 798 588 B1**
(45) Veröffentlichungstag und Bekanntmachung des Hinweises auf die Patenterteilung: **08.07.2009**
(21) Anmeldenummer: 06025513.0
(22) Anmeldetag: 11.12.2006
(51) Int. Cl.: G02B 27/01, B60K 35/00, B60K 37/02

(54) **Bediensystem zum Bedienen von Funktionen in einem Fahrzeug**
Operating system for functions in a motor vehicle
Système de commande des fonctions dans un véhicule automobile

(30) Priorität: 13.12.2005 DE 102005059449
(43) Veröffentlichungstag der Anmeldung: 20.06.2007
(73) Patentinhaber: GM Global Technology Operations, Inc., Detroit, MI 48265-3000 (US)
(72) Erfinder: Wilfert, Ralf, 64572 Büttelborn (DE)
(74) Vertreter: Daniel, Ulrich W.P.

(56) Entgegenhaltungen:
- WO-A-02/063601
- WO-A-03/025511
- DE-A1- 10 147 940
- DE-A1- 10 349 673
- DE-A1- 19 620 199
- DE-A1-4102004 005 15
- DE-C1- 10 039 432

## Beschreibung

Die Erfindung bezieht sich auf ein Bediensystem zum Bedienen von Funktionen in einem Fahrzeug und auf ein Fahrzeug mit einem derartigen Bediensystem.

Bediensysteme in Fahrzeugen sind im Allgemeinen als manuelle Schalter oder Taster ausgebildet, mittels welchen verschiedene Fahrzeugfunktionen durch den Benutzer einstellbar sind. Beispielsweise existieren Bedienelemente für eine Steuerung von Sicherheitskomponenten, wie beispielsweise eines elektronischen Sicherheitsassistenten, von Komforteinrichtungen, wie beispielsweise einer Sitzverstellung, einer Sitzheizung, elektrischer Fensterheber, elektrisch verstellbarer Außenspiegel, oder von Infotainment-Komponenten, wie beispielweise eines Navigationssystems oder eines Autoradios.

Des Weiteren sind in Fahrzeugen im Allgemeinen Anzeigeeinrichtungen vorgesehen, welche üblicherweise als VFDs (Vakuum-Fluoreszenz-Anzeigen) oder LCDs (Liquid Crystal Displays) zur Darstellung von Betriebsdaten Verwendung finden.

Es ist der Anmelderin bekannt, derartige Anzeigeeinrichtungen beispielsweise unterhalb der Oberkante des Armaturenbrettes und Bedienelemente im Bereich der Mittelkonsole im Sichtfeld des Fahrers vorzusehen.

Ferner sind Anzeigeeinrichtungen im Fahrzeug bekannt, bei denen ein für einen Beobachter sichtbares virtuelles Bild im Bereich der Windschutzscheibe erzeugt wird. Derartige Einrichtungen werden als Head-up-Displays (HUDs) bezeichnet.

Die Druckschrift DE 100 39 432 C1 beschreibt eine Bedieneinrichtung nach dem Oberbegriff des Anspruchs 1, bei welcher das von der Kamera aufgenommene Bild der Hand des Fahrers nicht direkt in das Blickfeld des Fahrers eingeblendet wird, sondern lediglich zur Positionsbestimmung der Hand des Fahrers verwendet wird. Entsprechend der auf diese Weise ermittelten Position der Hand des Fahrers wird anschließend lediglich ein virtueller Bildzeiger mittels einer optischen Anzeigeeinheit in das Blickfeld des Fahrers eingeblendet, wobei störende optische Hintergrundsignale in dem von der Kamera aufgenommene Bild ausgeblendet werden.

Die Druckschrift DE 196 20 199 A1 beschreibt eine Projektionsanzeigeeinrichtung zum Erzeugen eines Anzeigebildes vor der Windschutzscheibe eines Fahrzeugs durch die Reflektion eines Bildes an der Innenseite der Windschutzscheibe, wobei eine Anzeigeeinheit Anzeigelicht entsprechend abbildern von in einem Fahrzeug angebrachten Steuerschaltern emittiert. Wenn ein Fahrer einen Steuerschalter berührt, erfasst eine Berührungs/Erfassungseinrichtung diese Berührung und eine Anzeigesteuerung bildet lediglich diesen Steuerschalter ab mittels der oben genannten Anzeigeeinheit.

Die Druckschrift DE 10 2004 005 154 A1 beschreibt ein Anzeigesystem für ein Fahrzeug mit einer Anzeigeeinheit und einem optischen System, welches so ausgeführt ist, dass ein Betrachter die Darstellung auf der Anzeigeeinheit in der Ferne erscheint, wobei das optische System einen Hohlspiegel umfasst, der in Augennähe des Betrachters angeordnet ist und die Darstellung der Anzeigeeinheit in der Ferne als virtuelles Bild projiziert.

An den oben genannten Ansätzen hat sich jedoch die Tatsache als nachteilig herausgestellt, dass die bekannten Bedienelemente und Anzeigeeinrichtungen einen erheblichen Bauraum in dem Fahrzeug erfordern. Des Weiteren führt die Vielzahl an den zu steuernden Fahrzeugfunktionen zugeordneten Bedienelementen zu unübersichtlichen Gesamtanordnungen, bei welchen der Fahrer aufgrund der Komplexität und der Vielzahl der Bedienelemente bei einer Betätigung des gewünschten Bedienelementes zu sehr von dem Straßenverkehr abgelenkt wird. Es besteht ein unerwünschtes Sicherheitsrisiko.

Es ist Aufgabe der vorliegenden Erfindung, ein Bediensystem zum Bedienen von Funktionen in einem Fahrzeug zu schaffen, welches die oben genannten Nachteile beseitigt und einen geringeren Raumbedarf erfordert sowie mehr Gestaltungsfreiheiten ermöglicht.

Erfindungsgemäß wird diese Aufgabe durch ein Bediensystem mit den Merkmalen des Patentanspruchs 1 gelöst.

Die der vorliegenden Erfindung zugrunde liegende Idee besteht darin, dass das Bediensystem zum Bedienen von Funktionen in einem Fahrzeug eine Darstellungseinrichtung zum graphischen Darstellen von den Funktionen zugeordneten, fiktiven Bedienelementen auf eine zugeordneten Darstellungsfläche in dem Fahrzeug; eine Erfassungseinrichtung zum Erfassen von Bedieneingaben bei einer Betätigung der fiktiven Bedienelemente; und eine zentrale Steuereinheit aufweist, welche für eine Darstellung der fiktiven Bedienelemente in Abhängigkeit der erfassten Bedieneingaben mit der Erfassungseinrichtung und der Darstellungseinrichtung datenverbunden ist, den augenblicklichen Fahrzeugnutzer erkennt und die Darstellungseinrichtung ferner für eine graphische Darstellung einer benutzerdefinierten Menüebene mit vorab ausgewählten fiktiven Bedienelementen in Abhängigkeit des erkannten Fahrzeugnutzers ansteuert.

Es kann aufgrund der Verwendung beliebiger Komponenten des Fahrzeugs als Darstellungsfläche auf einen großen Stauraum einnehmende Displays verzichtet werden. Dadurch ergeben sich für den Hersteller aufgrund des geringeren benötigten Raumbedarfs verbesserte Gestaltungsfreiheiten und reduzierte Herstellungskosten.

Zudem können bestimmte Komponenten in dem Fahrzeug mit einer Doppelfunktion belegt werden, da sie neben ihrer eigentlichen Funktion, wie beispielsweise der Funktion eines Ablagefachs, eine weitere Funktion, nämlich das Bilden der Darstellungsfläche, aufweisen. Des Weiteren entfallen störende Reflektionen, die von beispielsweise Displayabdeckungen und Schnittlinien ausgehen.

In den Unteransprüchen finden sich vorteilhafte Ausgestaltungen und Verbesserungen des im Patentanspruch 1 angegebenen Bediensystems.

Gemäß einer bevorzugten Weiterbildung ist die Darstellungseinrichtung als Projektionseinrichtung zum

Projizieren der fiktiven Bedienelemente auf eine zugeordnete Projektionsfläche in dem Fahrzeug ausgebildet. Dadurch weist die vorliegende Erfindung den Vorteil auf, dass durch eine virtuelle Darstellung von jeweils lediglich den augenblicklich gewünschten Bedienelementen auf eine physikalische Anordnung von allen zur Verfügung stehenden Bedienelementen verzichtet werden kann. Dadurch wird der gesamte Innenraum des Fahrzeugs übersichtlicher ausgestaltet, sodass dem Hersteller wiederum eine größere Gestaltungsfreiheit ermöglicht wird. Auch sind mittels beispielsweise einer Projektion beliebig viele Fahrzeugfunktionen durch einzelne Bediensymbole bzw. Bedienelemente übersichtlich darstellbar, da lediglich die augenblicklich erforderlichen oder mit einer erhöhten Wahrscheinlichkeit demnächst ausgewählten Symbole bzw. Bedienelemente dargestellt werden können, wohingegen die wahrscheinlich nicht benötigten Bedienelemente nicht dargestellt werden keinen zusätzlichen Platzbedarf in dem Fahrzeug erfordern. Ferner sind derartige Projektions- und Erfassungseinrichtungen auf dem heutigen Markt mit sehr kleinen Abmessungen erhältlich, wobei als Projektionsfläche eine beliebige Komponente bzw. ein beliebiger Raumbereich des Fahrzeugs verwendet werden kann.

Gemäß einer bevorzugten Weiterbildung ist die Projektionseinrichtung als Laserprojektor, Durchlichtprojektor, Rückwandprojektor, Beamer bzw. Pico-Beamer, Head-up-Projektionseinrichtung, Helio-Displayeinrichtung, mobile Projektionseinrichtung, virtuelle Keyboardeinrichtung oder dergleichen ausgebildet. Diese Projektionsvarianten stellen jeweils klein herstellbare und in dem Fahrzeug auf einfache und kostengünstige Weise integrierbare Projektionssysteme dar.

Gemäß einer weiteren bevorzugten Weiterbildung ist die Projektionseinrichtung im Bereich der vorderen Dachkonsole angeordnet, wobei eine Projektion beispielsweise auf das Armaturenbrett erfolgt. Alternativ oder zusätzlich kann eine Projektionseinrichtung auch im Bereich der Lenksäulenverkleidung angeordnet sein, wobei in diesem Fall vorzugsweise eine Projektion auf die Mittelkonsole und/oder die Dachverkleidung erfolgt. Beispielsweise kann eine Projektionseinrichtung auch im Bereich der Tunnelverkleidung vorgesehen sein, wobei für diesen Fall vorzugsweise eine Projektion auf die Mittelkonsole und/oder die Dachverkleidung erfolgt. Es ist auch denkbar, dass die Projektionseinrichtung im Bereich des äußeren Dachrahmens und/oder der Dachkonsole integriert ist und eine Projektion auf eine zugeordneten Sonnenblende vorgesehen ist. Die Sonnenblende kann hierbei entweder in eingefahrener Stellung oder in ausgefahrener Stellung als Projektionsfläche verwendet werden. Es ist jedoch für einen Fachmann offensichtlich, dass beliebige Komponenten des Fahrzeugs als Projektionsfläche dienen können. Hierbei können die Projektionsflächen entweder flach oder uneben, beispielsweise mit vorbestimmten Krümmungen ausgebildet sein. Somit können vorbestimmte Fahrzeugkomponenten neben ihrer eigentlichen Funktion auch die Funktion der Projektionsfläche beinhalten. Damit kann kostengünstig auf bereits in dem Fahrzeug existierende Komponenten zurückgegriffen werden.

Nach einem weiteren bevorzugten Ausführungsbeispiel projiziert die Projektionseinrichtung neben den virtuellen Bedienelementen weitere Bildelemente, wie beispielsweise Ist-Werte von vorbestimmten Fahrzeugsystemen, beispielsweise eines Komfortsystems, eines Infotainmentsystems, eines Sicherheitssystems oder dergleichen. Somit beinhaltet das Bediensystem sowohl die Anzeigefunktion für eine Anzeige von Systemwerten und der betätigbaren Bedienelemente als auch die Funktion einer Realisierung der Bedienelemente an sich, welche durch beispielsweise Fingerführung ausgewählt und aktiviert werden.

Vorzugsweise ist die Projektionsfläche durch einen Festkörper, beispielsweise durch eine angestrahlte Komponente des Fahrzeugs ausgebildet. Hierbei sind beispielsweise der Deckel eines Ablagefachs, die Dachverkleidung, die Sonnenblende, die Lenkradnabe, das Armaturenbrett, die Mittelkonsole, die Türverkleidung, die Windschutzscheibe, ein in einer Brille integriertes Display, ein an der Brille oder an einer Kopfhalterung angebrachtes Display, oder dergleichen für vorzugsweise Personen in der ersten Sitzreihe und beispielsweise die Dachverkleidung, Dachbox, die Sitzrücken, die Kopfstützen, d. h. die Rückseiten der vorderen Kopfstützen, ein Ausklapptisch bzw. eine Ausklappablage in den Rückseiten der Vordersitze, die Türverkleidung, ein in einer Brille integriertes Display, ein an der Brille oder an einer Kopfhalterung montiertes Display für insbesondere Personen der zweiten Sitzreihe vorstellbar. Es ist für einen Fachmann offensichtlich, dass neben den oben aufgezählten Komponenten selbstverständlich weitere Komponenten als Projektionsflächen möglich sind.

Gemäß einer weiteren bevorzugten Weiterbildung ist die Projektionsfläche durch einen flüssigen oder gasförmigen Stoff, beispielsweise durch einen vorbestimmten Luftbereich des Fahrzeugs ausgebildet. Insbesondere bildet in einem sogenannten Helio-Display-System ein Luftbereich bzw. ein freier Bereich vor der Mittelkonsole, der Windschutzscheibe oder dergleichen, die Projektionsfläche für eine Projektion der Bedienelemente bzw. der darzustellenden Symbole, Ist-Werte oder dergleichen. Dadurch wird dem Hersteller eine große Gestaltungsfreiheit gewährleistet, da im Prinzip überall im Fahrzeuginneren eine für die Insassen günstige Projektionsflächenanordnung möglich ist.

Gemäß einem weiteren bevorzugten Ausführungsbeispiel ist eine zentrale Steuereinheit vorgesehen, welche für eine Projektion der graphischen Bedienelemente in Abhängigkeit der erfassten Bedieneingaben mit der Erfassungseinrichtung und der Projektionseinrichtung datenverbunden ist. Dadurch können auf einer gemeinsamen Projektionsfläche veränderbare bzw. variable Bedienelemente graphisch dargestellt werden, wobei auf der festen Projektionsfläche mehrere Menüebenen darstellbar und auswählbar sind. Die zentrale Steuereinheit steuert die Projektionseinrichtung derart an, dass auf der Projektionsfläche die dem betätigten graphischen Bedienelement zugeordnete Menüebene bzw. zugeordneten neuen graphischen Symbole dargestellt werden. Dadurch kann für die Darstellung neuer Bedienelemente auf die bestehende Projektionsfläche vorteilhaft zurückgegriffen werden.

Die graphischen Bedienelemente sind vorzugsweise zumindest teilweise als variable bzw. veränderbare Bedienelemente mit einer Menüebenenstruktur vorgesehen, wobei durch Betätigung eines vorbestimmten fiktiven Bedienelementes die zentrale Steuereinheit die Projektionseinrichtung für eine graphische Darstellung einer dem betätigten Bedienelement über- oder untergeordneten Menüebene ansteuert. Alternativ oder zusätzlich kann die zentrale Steuereinheit die Projektionseinrichtung auch für eine Darstellung einer benutzerdefinierten Menüebene mit vorab ausgewählten fiktiven Bedienelementen ansteuern. Beispielsweise erkennt die zentrale Steuereinheit anhand des Zündschlüssels den augenblicklichen Benutzer und steuert die Projektionseinrichtung für eine Darstellung der diesem Benutzer zugeordneten Anfangsmenüebene an. Auch können benutzerdefinierte Menüebenen mit vorab ausgewählten Bedienelementen in Abhängigkeit bestimmter Fahrsituationen dargestellt werden.

Es ist auch denkbar, dass die zentrale Steuereinheit die Projektionseinrichtung für eine Darstellung von fiktiven Bedienelementen in Abhängigkeit von bestimmten, augenblicklichen Fahrparametern ansteuert. Beispielsweise können bei einem Messen eines Reifenschlupfes die Bedienelemente für eine Aktivierung des automatischen Schlupfregelsystems dargestellt werden. Beispielsweise werden bei einem erkannten Fahrzeugunfall automatisch Notrufnummern, das Warnblinksymbol und andere nutzvolle betätigbare Bedienelemente graphisch durch die Projektionseinrichtung auf der zugeordneten Projektionsfläche abgebildet. Dadurch erfolgt keine Überladung von angezeigten Bedienelementen, sondern die augenblicklich sinnvollsten und mit einer hohen Auswahlwahrscheinlichkeit belegten Bedienelemente werden auf der zugeordneten Projektionsfläche dem Benutzer dargestellt.

Gemäß einem weiteren bevorzugten Ausführungsbeispiel ist die Darstellungseinrichtung als mit den fiktiven Bedienelementen versehene Darstellungsfläche ausgebildet. Beispielsweise sind fiktiven Bedienelemente auf der Darstellungsfläche graphisch aufgedruckt, aufgezeichnet, aufstrukturiert oder dergleichen. Als Darstellungsfläche kann beispielsweise ein Abschnitt der Mittelkonsole, des Dachhimmels, einer Sonnenblende, des Lenkradpralltopfes, des Armaturenbretts, der Seitenverkleidung, der Scheiben und/oder eine andere Kraftfahrzeugkomponente verwendet werden. In diesem Fall ist lediglich eine Erfassungseinrichtung notwendig, welche eine fiktive Betätigung des fiktiven Bedienelementes erkennt und über gegebenenfalls eine mit der Erfassungseinrichtung verbundene zentrale Steuereinheit die entsprechenden Befehle ausführen lässt. Hierbei kann die Erfassungseinrichtung beispielsweise im Bereich der vorderen Dachkonsole, der Lenksäulenverkleidung, der Tunnelverkleidung, des äußeren Dachrahmens, der Seitenverkleidung oder dergleichen angeordnet sein.

Nach einem weiteren bevorzugten Ausführungsbeispiel weist die Erfassungseinrichtung eine Kamera auf, welche eine Betätigung der projizierten Bedienelemente optisch erfasst. Zusätzlich oder alternativ ist auch eine Erfassungseinrichtung vorstellbar, welche eine berührungsempfindliche Bedienfläche, beispielsweise einen Touchscreen, umfasst, die eine Betätigung der projizierten Bedienelemente mechanisch oder elektrisch detektiert. In beiden Fällen generiert das Bediensystem vorzugsweise bei einer Betätigung eines virtuellen Bedienelementes eine akustische, haptische oder visuelle Rückmeldung, sodass der Benutzer darüber informiert wird, dass seine Bedieneingabe von dem System erkannt wurde.

Die fiktiven Bedienelemente sind nach einem weiteren Ausführungsbeispiel unterschiedlichen Fahrzeugfunktionen zugeordnet. Diese Fahrzeugfunktionen können beispielsweise Sicherheitsfunktionen, Komfortfunktionen, Infotainmentfunktionen, speziellen Funktionen von Spezialfahrzeugen oder anderen vorstellbaren Funktionen entsprechen.

Die Erfindung wird im Folgenden anhand von Ausführungsbeispielen unter Bezugnahme auf die beiliegenden Figuren der Zeichnung näher erläutert. Von den Figuren zeigen:
Fig. 1 ein Blockschaltbild des Bediensystems gemäß einem bevorzugten Ausführungsbeispiel der vorliegenden Erfindung;
Fig. 2 eine schematische Darstellung einer Projektionsvariante gemäß einem ersten bevorzugten Ausführungsbeispiel der vorliegenden Erfindung;
Fig. 3 eine schematische Darstellung einer Projektionsvariante gemäß einem zweiten bevorzugten Ausführungsbeispiel der vorliegenden Erfindung;
Fig. 4 eine schematische Darstellung einer Projektionsvariante gemäß einem dritten bevorzugten Ausführungsbeispiel der vorliegenden Erfindung;
Fig. 5 eine schematische Darstellung einer Projektionsvariante gemäß einem vierten bevorzugten Ausführungsbeispiel der vorliegenden Erfindung;
Fig. 6 eine schematische Darstellung einer Projektionsvariante gemäß einem fünften bevorzugten Ausführungsbeispiel der vorliegenden Erfindung;
Fig. 7 eine schematische Darstellung einer Projektionsvariante gemäß einem sechsten bevorzugten Ausführungsbeispiel der vorliegenden Erfindung;
Fig. 8 eine schematische Darstellung einer Projektionsvariante gemäß einem siebten bevorzugten Ausführungsbeispiel der vorliegenden Erfindung;
Fig. 9 eine schematische Darstellung eines Projektionsbildes, welches eine erste Menüebene gemäß einem bevorzugten Ausführungsbeispiel darstellt;
Fig. 10 eine schematische Darstellung eines Projektionsbildes, welches eine zweite Menüebene gemäß einem bevorzugten Ausführungsbeispiel darstellt;
Fig. 11 eine schematische Darstellung eines Projektionsbildes, welches eine zweite Menüebene gemäß einem weiteren bevorzugten Ausführungsbeispiel darstellt;
Fig. 12 eine schematische Darstellung eines Projektionsbildes, welches eine zweite Menüebene gemäß einem weiteren bevorzugten Ausführungsbeispiel darstellt;
Fig. 13 eine schematische Darstellung eines Projektionsbildes, welches eine zweite Menüebene gemäß einem weiteren bevorzugten Ausführungsbeispiel darstellt; und
Fig. 14 eine schematische Darstellung eines Projektionsbildes, welches eine dritte Menüebene gemäß einem bevorzugten Ausführungsbeispiel darstellt.

In den Figuren der Zeichnung bezeichnen dieselben Bezugszeichen gleiche oder funktionsgleiche Komponenten, soweit nichts Gegenteiliges angegeben ist.

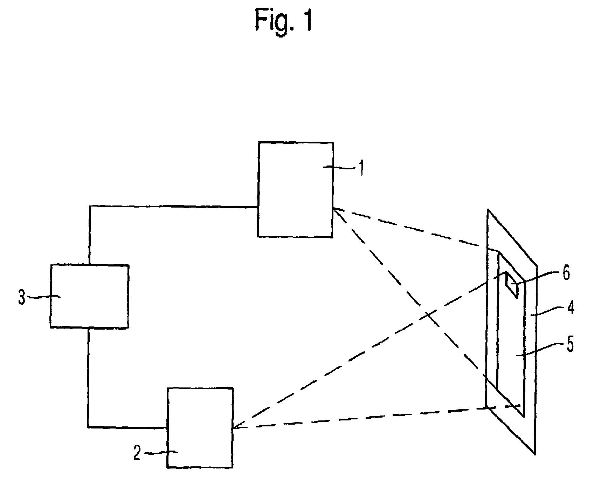

Fig. 1 illustriert ein schematisches Blockschaltbild eines Bediensystems gemäß einem bevorzugten Ausführungsbeispiel der vorliegenden Erfindung. Gemäß diesem Ausführungsbeispiel weist das Bediensystem vorzugsweise eine Projektionsecintrictung 1 auf, welche ein vorbestimmtes Projektionsbild auf eine zugeordnete Projektionsfläche 4 in einem Fahrzeug projiziert. Das Projektionsbild weist insbesondere mehrere Bildelemente 6 auf, welche Bedienelemente zum Bedienen von vorbestimmten Fahrzeugfunktionen oder Ist-Merte von vorbestimmten Fahrzeugsystemen darstellen. Vorzugsweise ist die Projektionseinrichtung 1 mit einer zentralen Steuereinheit 3 datenverbunden.

Wie in Fig. 1 illustriert ist, umfasst das Bediensystem ferner eine Erfassungseinrichtung 2, welche bei einer Betätigung der virtuellen Bedienelemente 6 diese Bedieneingaben erfasst. Die Erfassungseinrichtung 2 ist entweder als einzelne Komponente ausgebildet oder zumindest zusammen mit der Projektionseinrichtung 1 in einem gemeinsamen Gerät integriert. Vorzugsweise ist die Erfassungseinrichtung 2 ebenfalls mit der zentralen Steuereinheit 3 datenverbunden, welche die erfassten Bedieneingaben empfängt, auswertet und in Abhängigkeit der erfassten Bedieneingaben die Projektionseinrichtung 1 derart steuert, dass die neu eingestellten Ist-Werte der vorbestimmten Fahrzeugsysteme bzw. neu ausgewählte Bedienelemente oder Bedienebenen von vorbestimmten Fahrzeugfunktionen auf der Projektionsfläche 4 projiziert werden.

Die Projektionseinrichtung 1 kann beispielsweise als Laser-basierter Pico-Beamer mit äußerst kleinen Abmessungen ausgebildet sein. Generell sind beliebige Projektoren verwendbar, wie beispielsweise Laser- oder Durchlichtprojektoren. Als Projektionseinrichtung 1 kann ferner auch ein Diaprojektor, ein Rückwandprojektor, ein Laser mit oder ohne einer zusätzlichen Optik, ein Laser mit einer integrierten Maske, ein Head-up-Display, ein Helio-Display, ein mobiles Projektionsgerät oder dergleichen verwendet werden. Derartige Systeme weisen vorzugsweise allesamt eine Lichtquelle, ein Display und ein zugeordnetes Linsensystem auf, sodass durch spezielle Ausgestaltung des Linsensystems bzw. der verwendeten Masken die Abmessungen und die Darstellungsarten der Projektionsbilder 5 bestimmt werden. Kleine Abmessungen der Systeme ermöglichen vorteilhaft einen Einbau an geeigneten Positionen in dem Fahrzeug, ohne dass ein großer Platzbedarf erforderlich ist.

Beispielsweise können das sogenannte "virtuelle Keyboard" und das sogenannte "Helio-Display" für eine möglichst einfache und platzsparende Darstellungsmöglichkeit der einzelnen Bedienelemente und weiterer Symbole in dem Fahrzeug verwendet werden.

Bei einem "virtuellen Keyboard" enthält das Gerät als Projektionseinrichtung beispielsweise einen kleinen Laser, welcher auf die zugeordnete Projektionsfläche 4 eine virtuelle, sichtbare und nicht veränderliche Eingabemaske projiziert. Ein zweites Lasersystem erfasst in Verbindung mit einer C-MOS-Kamera etwaige sich in der Projektionsfläche befindliche Fingerspitzen. Etwa 3 mm über der Oberfläche der Projektionsfläche 4 spannt der zweite Laser einen Lichtteppich auf, wobei die in der Mitte des Gerätes hinter einem IR-Filter vorgesehene C-MOS-Kamera bei einem Durchdringen des Lichtteppichs durch einen Finger einen Lichtblitz registriert. Dieser Lichtblitz wird örtlich einem bestimmten Symbol bzw. einem bestimmten Bedienelement der Eingabemaske zugeordnet. Dadurch können beispielsweise bis zu 400 Zeichen pro Minute erkannt werden.

Vorteilhaft wird jede Eingabe durch beispielsweise ein akustisches, optisches oder haptisches Signal rückgemeldet, sodass dem Benutzer ein Erkennen seiner Bedieneingabe signalisiert wird. Die erfasste Bedieneingabe wird an die zentrale Steuereinheit 3 gesendet, welche die erfassten Signale auswertet und in Abhängigkeit der erfassten Bedieneingabe die Projektionseinrichtung 1 derart steuert, dass auf der Projektionsfläche 4 die eingestellten Werte bzw. Bedienelemente oder neuen Bedienebenen projiziert werden.

Des Weiteren sind sogenannte "Helio-Displays" einsetzbar, bei welchen das Projektionsbild 5 virtuell im freien Raum in dem Fahrzeug entsteht. Die Projektionsfläche fungiert mittels eines integrierten Laserüberwachungssystems als virtueller Touchscreen, sodass Bedieneingaben frei im Raum möglich sind. Dabei wird Luft in ein Gerät eingeführt, modifiziert, anschließend aus dem Gerät herausgeleitet und eine Abbildung der Projektion angeleuchtet. Obwohl die erzeugten Bilder auf einer zweidimensionalen Fläche abgebildet werden, erscheinen die dargestellten Bildelemente für den Betrachter dreidimensional.

Es ist allerdings für einen Fachmann offensichtlich, dass beliebige Systeme für eine Projektion von virtuellen Bildelemente für eine Realisierung des vorliegenden Erfindungsgedanken verwendet werden können.

Die Projektionseinrichtung 1 kann dabei verschiedene Bildelemente 6 auf der zugeordneten Projektionsfläche 4 abbilden, wobei insbesondere Ist-Werte von Fahrzeugsystemen und Bedienelemente von Fahrzeugfunktionen projiziert werden. Beispielsweise werden Ist-Werte von Sicherheitssystemen, beispielsweise einer Reifenluftdrucküberwachung, eines Steigungsmessers, eines Neigungsmessers oder eines Einparkassistenten auf der Projektionsfläche 4 projiziert. Betätigbare Bedienelemente können beispielsweise in den Bereichen Komfort, Sicherheit und Infotainment abgebildet werden. Beispielsweise werden Bedienelemente einer Heizung, Lüftung oder Klimaanlage, einer Sitzverstellung, einer Sitzheizung bzw. Sitzbelüftung, von elektrischen Fensterhebern, von elektrisch verstellbaren Außenspiegeln, einer Audioanlage, einer DVD-Video-Anlage, eines Tuners, einer DAB-Anlage, eines CD-, Minidisc-, MP3-, DVD- oder Audioplayers, eines Navigationssystems, eines ESP-Systems oder dergleichen dargestellt, wobei der Benutzer durch Antippen des dargestellten Bedienelementes 6 mit beispielsweise dem Zeigefinger in eine über- oder untergeordnete Menüebene mit neuen Bedienelementen gelangt, oder die dem jeweiligen Bedienelement zugeordneten Einstellungen bzw. Systemwerte in gewünschter Weise ändern kann. Auch Informationen eines digitalen Verkehrssystems, eines Internetsystems, eines Fernsehsystems oder eines digitalen Reiseführers sowie einer Telefonanlage können als bedienbare Elemente oder als Ist-Werte darstellende Symbole auf der Projektionsfläche 4 angezeigt werden. Des Weiteren können auch Ist-Werte oder Bedienelemente von Spezialfahrzeugen, beispielsweise ein Taxameter, die Angaben eines Funkgerätes, einer Zusatzbeleuchtung, einer Sirene, eines Geschwindigkeitsmessgerätes oder dergleichen dargestellt werden.

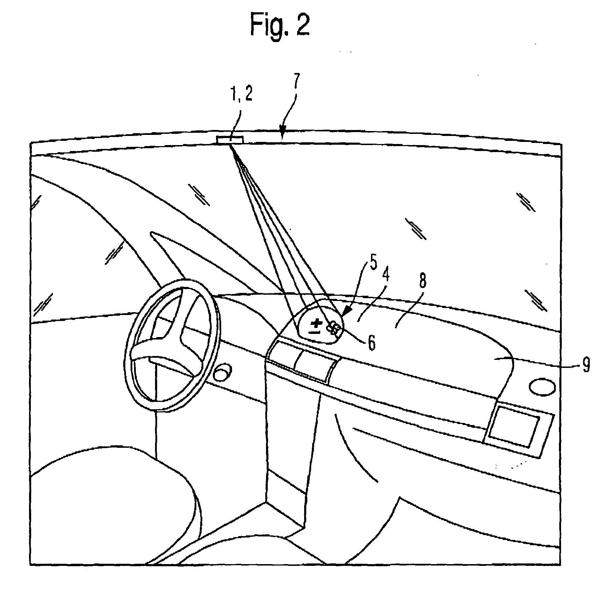

Physikalische Bedienelemente können somit gemäß der vorliegenden Erfindung durch virtuelle Bedienelemente vorteilhaft ersetzt werden. Die Bedienelemente werden dazu gemäß dem vorliegenden Ausführungsbeispiel auf eine vorbestimmte Komponente bzw. ein Medium des Fahrzeugs projiziert. Ausführungsbeispiele für derartige Projektionsflächen finden sich in den in den Figuren 2 bis 8 dargestellten Ausführungsbeispielen; welche weiter unten ausführlicher erläutert werden.

Die projizierten Symbole, Bedienelemente, Graphiken oder Bilder sind nicht zwangsläufig fest in einer Maske. Es können mehrere Masken in einem Magazin des Systems vorgesehen sein, welche je nach Anwendung automatisch vor die Lichtquelle des Systems drehbar sind. Alternativ kann die Bildgenerierung auch flexibel ausgestaltet werden und die einzelnen Bildelemente 6 können dabei unterschiedliche Formen und Farben aufweisen, wobei jeder Fahrzeugfunktion bzw. Fahrzeuganwendung beispielsweise eine bestimmte Farbe zugeordnet ist. Dies erhöht die Akzeptanz durch den Benutzer und unterstützt die Bedienbarkeit. Zudem können sich die Graphiken der Bildelemente 6 während einer Bedienung derart verändern, dass der Benutzer über seine Bedieneingabe eine direkte Rückmeldung erfährt. Beispielsweise kann bei einer Veränderung des Gebläses durch Antippen des entsprechend zugeordneten, virtuellen Bedienelementes die zentrale Steuereinheit 3 die Projektionseinrichtung 1 derart ansteuern, dass auf der Projektionsfläche 4 die jeweilige Gebläsestufe und die eingestellte Temperatur dargestellt wird.

Es sind optische Erfassungseinrichtungen 2 möglich, welche berührungslos mittels eines Lasers die Bedieneingaben des Benutzers erfassen und auswerten. Anstelle einer optischen Erfassung der Bedieneingabe ist es auch vorstellbar, als Erfassungseinrichtung 2 eine berührungssensitive Einrichtung zu verwenden, welche beispielsweise als Touchscreen ausgebildet ist, die bei einer Bedieneingabe eine Druckänderung oder eine kapazitive Änderung der Projektionsfläche 4 erfasst und auswertet. Die Projektionsfläche 4 weist hierbei eine glatte Oberfläche ohne haptischer Rückmeldung oder eine strukturierte Oberfläche mit haptischer Rückmeldung auf.

Im Folgenden werden unter Bezugnahme auf die Figuren 2 bis 8 bevorzugte Ausführungsbeispiele für mögliche Einbaupositionen der Projektionseinrichtung 1 sowie der Erfassungseinrichtung 2 und mögliche Projektionsflächen 4 näher beschrieben.

Fig. 2 illustriert eine schematische Ansicht einer Projektionsvariante gemäß einem ersten bevorzugten Ausführungsbeispiel der vorliegenden Erfindung.

Gemäß dem in Fig. 2 dargestellten Ausführungsbeispiel ist die Projektionseinrichtung 1 in der vorderen Dachkonsole 7 des Fahrzeugs integriert und projiziert das Projektionsbild 5 auf das gesamte Armaturenbrett 8 oder auf einen ausgewählten Abschnitt des Armaturenbretts 8. Dadurch kann ein zusätzliches Display in dem Fahrzeug als Anzeigeeinrichtung eingespart werden, sodass bei der Ausgestaltung des Armaturenbretts mehr Gestaltungsfreiheit vorherrscht.

Alternativ oder zusätzlich kann die Projektionsfläche 4 auch auf dem Deckel 9 des Handschuhfachs vorgesehen sein, wobei in diesem Fall die Anzeigeeinrichtung keinen Stauraum erfordert, sodass unterhalb des Deckels mehr Platz für beispielsweise aufzubewahrende Gegenstände oder einen Airbag entsteht.

Die Projektionsfläche 4 kann beispielsweise als ebene Fläche einer Fahrzeugkomponente ausgebildet sein oder in verschiedenen unebenen Formen existieren. Bei gekrümmten Projektionsflächen wird vorzugsweise das zu projizierende Bild mittels geeigneter Einrichtungen entsprechend verformt bzw. verzerrt, um ein für den Benutzer deutlich zu erkennendes Bild darzustellen.

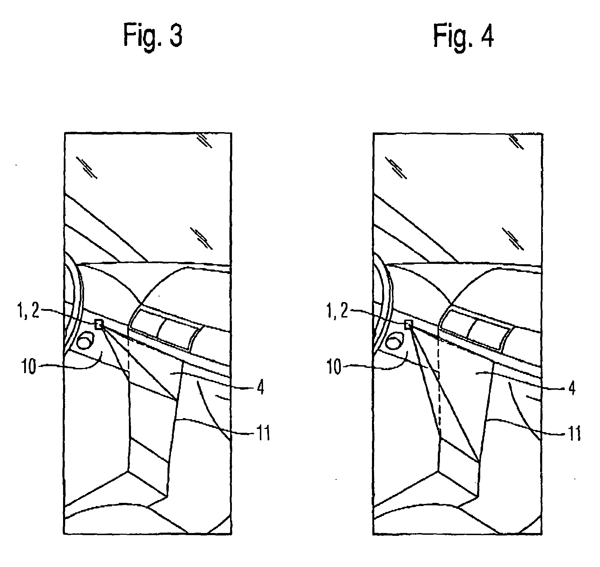

Figuren 3 und 4 illustrieren Projektionsvarianten gemäß einem zweiten und dritten bevorzugten Ausführungsbeispiel. Im Unterschied zum ersten Ausführungsbeispiel sind die Projektionseinrichtung 1 und die Erfassungseinrichtung 2 in der Lenksäulenverkleidung 10 der Lenksäule des Fahrzeugs integriert. Als Projektionsfläche 4 dient in diesem Fall vorzugsweise die Mittelkonsole 11. Dabei kann entweder lediglich ein vorbestimmter Abschnitt der Mittelkonsole 11, wie in Fig. 3 dargestellt, oder die gesamte Mittelkonsole 11, wie in Fig. 4 dargestellt, als Projektionsfläche 4 in Abhängigkeit der darzustellenden Bedienelemente bzw. Ist-Werte verwendet werden.

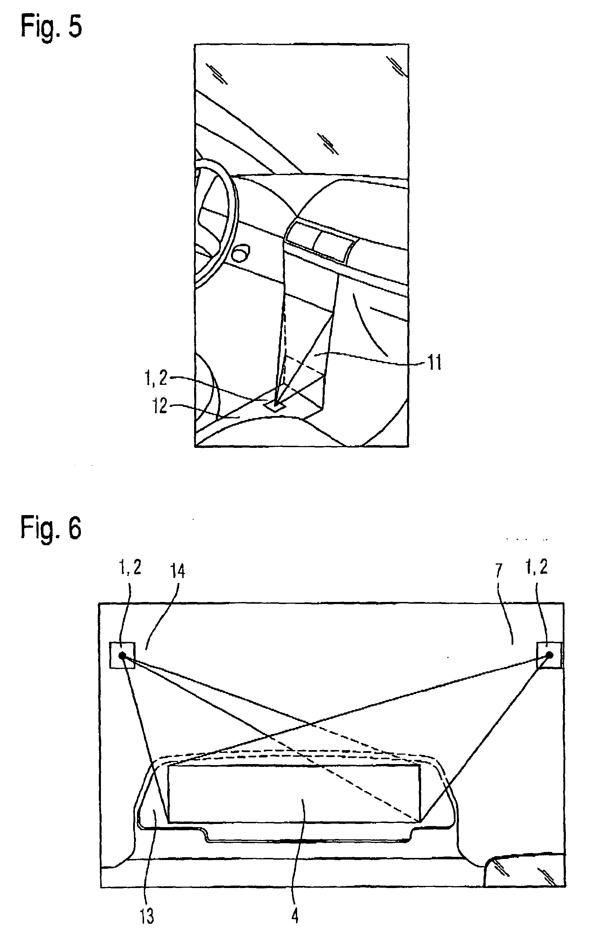

Fig. 5 illustriert eine Projektionsvariante gemäß einem vierten bevorzugten Ausführungsbeispiel der vorliegenden Erfindung. Gemäß dem vierten Ausführungsbeispiel sind die Projektionseinrichtung 1 und die Erfassungseinrichtung 2 vorzugsweise in der Tunnelverkleidung 12 integriert, wobei eine Projektion wiederum vorzugsweise auf die Mittelkonsole 11 erfolgt, wie in Fig. 5 dargestellt ist.

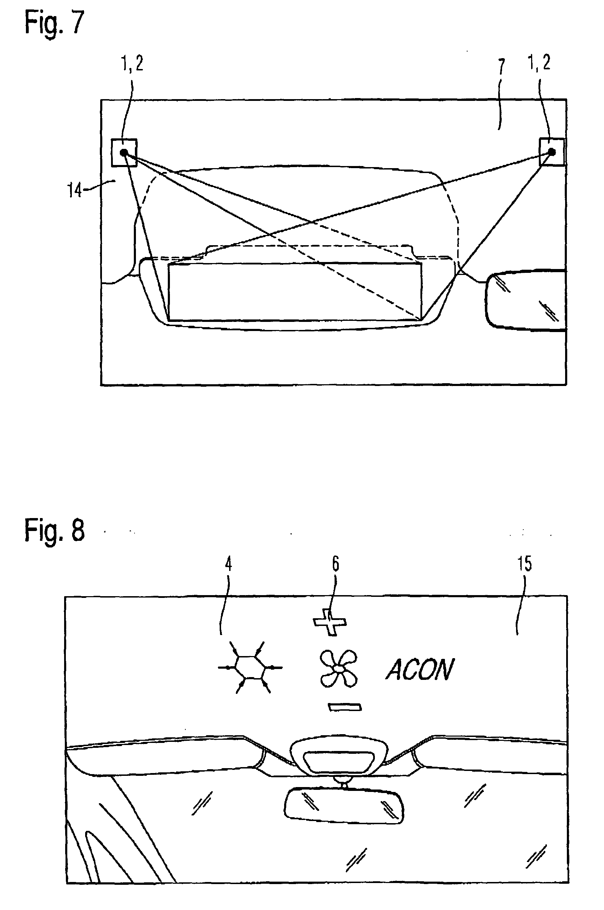

Die Figuren 6 und 7 illustrieren Projektionsvarianten gemäß einem fünften bzw. einem sechsten Ausführungsbeispiel der vorliegenden Erfindung. Gemäß diesen Ausführungsbeispielen ist die Projektionseinrichtung 1 sowie die Erfassungseinrichtung 2 vorzugsweise im Dachbereich integriert, wobei eine Projektion vorzugsweise auf eine zugeordneten Sonnenblende 13 erfolgt.

Demgemäß sind die Projektionseinrichtung 1 und die Erfassungseinrichtung 2 als gemeinsames Gerät in dem äußeren Dachrahmen 14 und/oder in der Dachkonsole 7, wie oben bereits erläutert, vorgesehen. Beispielsweise kann auch die Projektionseinrichtung 1 in dem äußeren Dachrahmen 14 und die Erfassungseinrichtung 2 in der Dachkonsole 7 vorgesehen werden oder vice versa. Als Projektionsfläche 4 wird vorteilhaft eine eingeklappte Sonnenblende 13 gemäß dem in Fig. 6 dargestellten fünften Ausführungsbeispiel oder eine ausgeklappte Sonnenblende 13 gemäß dem in Fig. 7 dargestellten sechsten Ausführungsbeispiel verwendet. Es ist auch möglich, dass beispielsweise in der Dachkonsole 7 ein Gerät für eine Projektion und Erfassung von Bildelementen auf einer eingeklappten Sonnenblende und in dem äußeren Dachrahmen 14 ein Gerät zur Projektion und Erfassung von Bildelementen auf einer ausgeklappten Sonnenblende integriert sind. Dies gilt selbstverständlich auch für den umgedrehten Fall.

Zur automatischen Bildnachführung in Position und Schärfe, sowie einer entsprechenden Verzerrung kann beispielsweise zusätzlich der eingestellte Winkel der Sonnenblende 13 durch eine Erfassungseinrichtung erfasst und durch die zentrale Steuereinheit mit berücksichtigt werden.

Fig. 8 illustriert eine Projektionsvariante gemäß einem siebten bevorzugten Ausführungsbeispiel der vorliegenden Erfindung. Gemäß dem vorliegenden Ausführungsbeispiel sind beispielsweise die Anzeigesymbole, Ist-Werte und Bedienelemente 6 auf den Dachhimmel 15 des Fahrzeugs projiziert. Hierbei kann das die Projektionseinrichtung 1 und die Erfassungseinrichtung 2 umfassende Gerät in der Mittelkonsole, der Lenksäulenverkleidung, der Tunnelverkleidung oder einer anderen geeigneten Position im Fahrzeug integriert sein.

Durch Antippen des entsprechenden Bildelementes 6, zum Beispiel des "+"-Symbols, erfasst die Erfassungseinrichtung die Bedieneingabe des Benutzers, dass beispielsweise die Temperatur um eine Einstellungsstufe erhöht werden soll. Diese Bedieneingabe wird von der Erfassungseinrichtung erfasst und an die zentrale Steuereinheit gesendet, welche wiederum die entsprechende Funktion ausführt und die Projektionseinrichtung für eine Projektion der augenblicklich vorherrschenden und eingestellten Temperatur auf dem Dachhimmel 15 ansteuert.

In den oben genannten Ausführungsbeispielen wird die Projektionsfläche 4 jeweils durch die Oberfläche einer Fahrzeugkomponente gebildet, wobei der entsprechende Gegenstand geeignet angestrahlt wird. Allerdings ist auch eine Projektionsfläche im freien Raum, vorzugsweise durch das oben beschriebene "Helio-Display", möglich, sodass die Luft in einem derartigen Fall die Projektionsfläche darstellt.

Im Allgemeinen können feste Medien, flüssige Medien oder gasförmige Medien als Projektionsfläche verwendet werden. Bei festen Medien sind transparente Mattscheiben oder mit Gel gefüllte Kissen bzw. Verkleidungsteile möglich. Als undurchsichtige, feste Medien eignen sich insbesondere Kunststoffe mit oder ohne spezieller Beschichtung oder Farbe. Die Oberfläche der angestrahlten Fahrzeugkomponenten kann neben Kunststoff auch aus Stoff oder Metall hergestellt sein. Bei flüssigen Stoffen kann erzeugter Nebel oder Dunst Anwendung finden. Luft wie im Falle eines "Helic-Displays" oder ein virtuelles Bild in Verbindung mit der Windschutzscheibe oder eines Combiners können ebenfalls die geeigneten gasförmigen Medien darstellen.

Im Allgemeinen sind sämtliche Fahrzeugkomponenten mit einer vorbestimmten Oberfläche als Projektionsfläche geeignet. Gegebenenfalls müssen die erzeugten Bilder durch geeignete Mittel entsprechend verzerrt, vergrößert, verkleinert oder anderweitig modifiziert werden. Im Folgenden werden lediglich beispielhaft noch einige Fahrzeugkomponenten aufgezählt, welche in der vorliegenden Erfindung als Projektionsfläche geeignet sind.

Bezüglich der Insassen der ersten Sitzreihe sind dies beispielsweise der Deckel eines Ablagefachs, die Dachverkleidung, die Sonnenblenden, die Lenkradnabe, das Armaturenbrett, die Mittelkonsole, die Türverkleidung, die Windschutzscheibe, ein Display, welches in einer Brille integriert ist, oder ein Display, welches an einer Brille oder an einer Kopfhalterung montiert ist.

Im Falle der Insassen der zweiten Sitzreihe sind insbesondere die Dachverkleidung, die Dachbox, die Rückseiten der Vordersitze, die Rückseiten der vorderen Kopfstützen, ein Ausklapptisch bzw. eine Ausklappablage in den Rückseiten der Vordersitze, die Türverkleidung, ein Display, welches in einer Brille integriert ist, oder ein Display, welches an einer Brille oder an einer Kopfhalterung montiert ist besonders geeignet. Allerdings ist für einen Fachmann offensichtlich, dass weitere, oben nicht genannte Komponenten ebenfalls für den vorliegenden Erfindungsgedanken der vorliegenden Erfindung eingesetzt werden können.

Vorzugsweise sind gemäß einem bevorzugten Ausführungsbeispiel der vorliegenden Erfindung, wobei wiederum auf die Darstellung in Fig. 1 Bezug genommen wird, die virtuellen bzw. fiktiven Bedienelemente 6 variabel bzw. veränderbar derart ausgebildet, dass zumindest vorbestimmte Bedienelemente 6 eine Menüebenenstruktur aufweisen. Beispielsweise wird dem Kraftfahrzeugbenutzer anfänglich ein benutzerdefiniertes Anfangsmenübild durch die Projektionseinrichtung 1 auf der zugeordneten Projektionsfläche 4 dargestellt. Der augenblickliche Kraftfahrzeugbenutzer wird zum Beispiel anhand des Zündschlüssels oder dergleichen von dem Fahrzeugsystem erkannt, sodass dem augenblicklichen Fahrzeugbenutzer benutzerdefinierte Anfangsmenüflächen zugeordnet werden.

Des Weiteren ist vorstellbar, dass die augenblicklich angezeigten Projektionsbilder 5 bzw. Bildelemente 6 an den augenblicklichen Fahrzeugzustand angepasst bzw. in Abhängigkeit von augenblicklichen Fahrparametern durch die zentrale Steuereinheit 3 ausgewählt und über die Projektionseinrichtung 1 dem Benutzer dargestellt werden.

Beispielsweise werden dem Benutzer bei Erkennen eines Einparkvorgangs die den Einparksensoren zugeordneten Bedienelemente bzw. Zustandsgrößen automatisch angezeigt, sodass der Benutzer eine Aktivierung bzw. Deaktivierung vorbestimmter Sensorelemente durch eine Betätigung derselben vornehmen oder die augenblicklichen Einparkvexhältnisse sofort ablesen kann. Des Weiteren werden dem Benutzer beispielsweise bei einem erfassten Reifenschlupf die einem automatischen Schlupfregelsystem zugeordneten Bedienelemente für eine Aktivierung bzw. Deaktivierung desselben angezeigt. Die Darstellung einer zu aktivierenden Warnblinkeinrichtung oder von Notrufnummern ist insbesondere bei einem erfassten Kraftfahrzeugunfall sinnvoll. Ein weiteres Beispiel stellt die Darstellung der Tankanzeige im Falle eines sich leerenden Tanks dar. Die oben genannten Beispiele sind lediglich exemplarisch zu verstehen, wobei für einen Fachmann offensichtlich ist, dass in Abhängigkeit des augenblicklichen Fahrzustandes oder augenblicklich erfasster Fahrparameter insbesondere diejenigen Bedienelemente graphisch dargestellt werden, welche augenblicklich eine höhere Wahrscheinlichkeit dafür aufweisen, dass der Kraftfahrzeugbenutzer eine Betätigung dieser in naher Zukunft erwünscht. Somit muss der Kraftfahrzeugbenutzer sich nicht durch etliche Menüebenen erst hindurch manövrieren, sondern kann auf einfache, schnelle und benutzerfreundliche Weise die augenblicklich sinnvollen und gewünschten Bedienelemente betätigen. Es ist auch vorstellbar, dass jeder Kraftfahrzeugbenutzer seine Projektionsbilder benutzerspezifisch definiert, sodass bei Erkennen eines bestimmten Kraftfahrzeugbenutzers die diesem zugeordneten Projektionsbilder oder Menüebenen automatisch dargestellt werden. Die von dem jeweiligen Kraftfahrzeugbenutzer individuell zusammengestellten Projektionsbilder 5 bzw. Menüebenen werden vorzugsweise in einer zugeordneten Speichereinrichtung abgespeichert, wobei die Speichereinrichtung mit der zentralen Steuereinheit 3 verbunden ist.

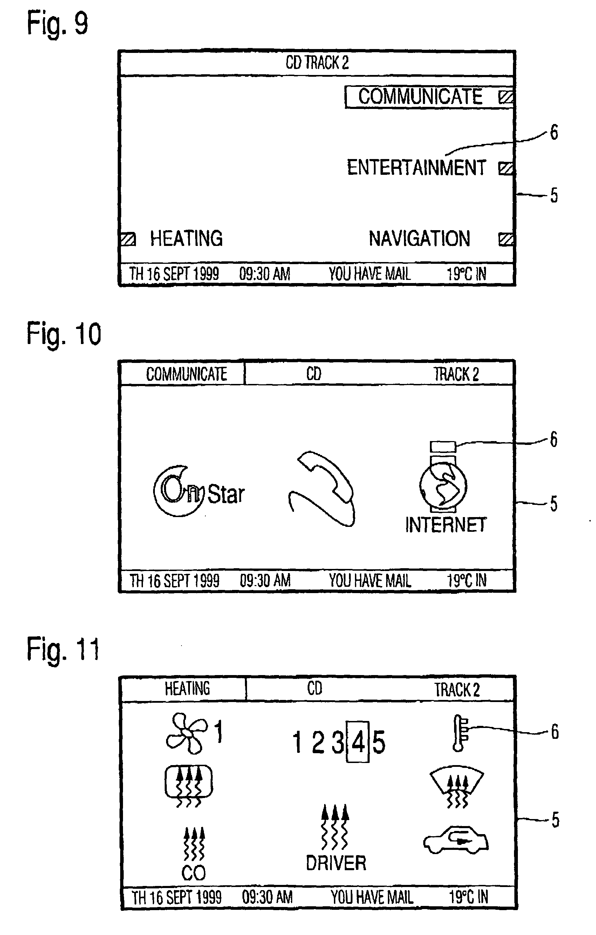

Im Folgenden werden unter Bezugnahme auf die Figuren 9 bis 14 Ausführungsbeispiele für eine Menüebenenstruktur der fiktiven Bedienelemente näher erläutert. Fig. 9 illustriert dabei eine schematische Darstellung eines Projektionsbildes 5 als beispielhaftes Anfangsbild einer ersten Menüebene. Wählt der Benutzer beispielsweise das Bedienelement "COMMUNICATE" durch Antippen des entsprechenden fiktiven Bedienelementes 6 mit beispielsweise einem Finger aus, so erfasst die Erfassungseinrichtung 2 diese Bedieneingabe und sendet die erfassten Signale an die zentrale Steuereinheit 3. Die zentrale Steuereinheit 3 wiederum steuert die Projektionseinrichtung 1 derart an, dass diese die dem ausgewählten Bedienelement "COMMUNICATE" untergeordnete Menüebene gemäß Fig. 10 auf der zugeordneten Projektionsfläche 4 dem Kraftfahrzeugbenutzer anzeigt. In diesem Fall kann der Kraftfahrzeugbenutzer zwischen beispielsweise einer Internetverbindung, einer Telefonverbindung oder dergleichen auswählen.

Betätigt der Benutzer hingegen das Bedienelement "HEATING" der ersten Menüebene in Fig. 9, so wird bei Erkennen seiner Bedieneingabe die diesem Bedienelement untergeordnete Menüebene gemäß Fig. 11 dargestellt. Durch erneute Betätigung eines der in der zweiten Menüebene gemäß Fig. 11 dargestellten Bedienelementes 6 kann beispielsweise eine gewünschte Einstellung vorgenommen oder eine weitere untergeordnete Menüebene aktiviert werden. Beispielsweise kann die Luftverteilung, die Gebläsestufe, die Temperatur, die Umluftklappen, die Heckscheibenheizung oder dergleichen direkt aktiviert bzw. deaktiviert werden oder es kann durch Betätigung des entsprechenden Bedienelementes 6 in eine diesem Bedienelement unter- oder übergeordnete Menüebene gelangt werden.

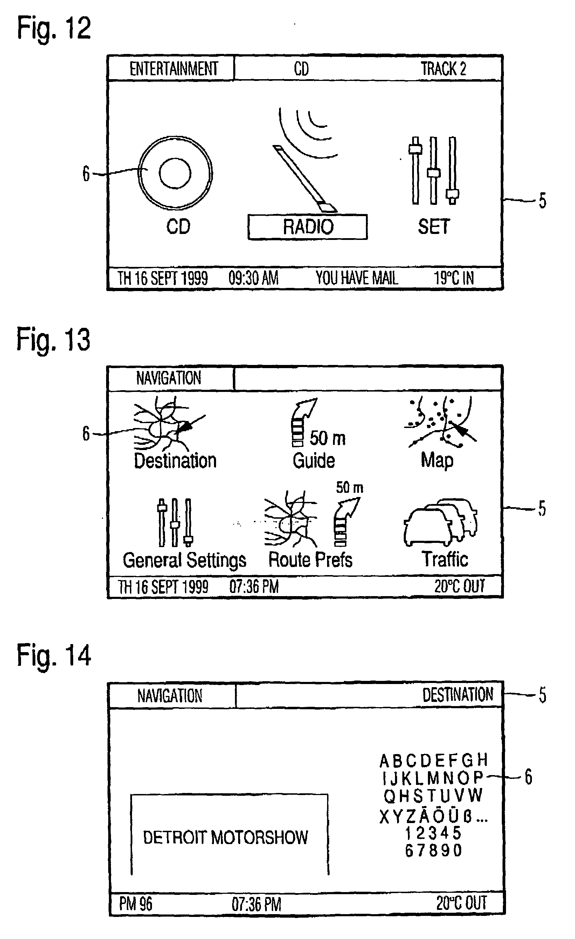

Fig. 12 illustriert eine beispielhafte Darstellung einer untergeordneten Menüebenendarstellung des in Fig. 9 dargestellten Bedienelementes "ENTERTAINMENT". Fig. 13 illustriert eine beispielhafte zweite Menüebene des Bedienelementes "NAVIGATION" aus Fig. 9, wobei beispielsweise durch eine Betätigung des Bedienelementes "DESTINATION" aus Fig. 13 eine wiederum untergeordnete Menüebene, d. h. eine dritte Menüebene gemäß Fig. 14 auf der zugeordneten, gemeinsamen Projektionsfläche 4 dargestellt wird.

Die oben genannten Beispiele sind lediglich exemplarisch zu verstehen, da jeglicher in einem Kraftfahrzeug möglichen Funktion beliebige Bedienelemente mit einer beliebigen Menüebenenstruktur und beliebigen Symbolen zuordbar sind und alle Funktionen über das erfindungsgemäße Bediensystem dem Kraftfahrzeugbenutzer auf einfache, übersichtliche und benutzerfreundliche Weise darstellbar sind.

Im Folgenden wird ein weiteres bevorzugtes Ausführungsbeispiel der vorliegenden Erfindung näher beschrieben. Gemäß diesem Ausführungsbeispiel ist die Darstellungseinrichtung nicht als Projektionseinrichtung ausgebildet, sondern die einzelnen fiktiven Bedienelemente 6 sind auf zugeordneten Darstellungsflächen in dem Kraftfahrzeug graphisch aufgedruckt, aufgezeichnet, aufstrukturiert oder dergleichen. Als Darstellungsflächen sind analog zu den Varianten gemäß den Figuren 2 bis 8 beispielsweise die Mittelkonsole, der Dachhimmel, die Sonnenblenden, der Lenkradpralltopf, die Lenkradsäule, das Armaturenbrett, die Scheiben, die Seitenverkleidungen, Bodenabschnitte und/oder eine andere beliebige Kraftfahrzeugkomponenten mit einer für den Kraftfahrzeugbenutzer erreichbaren Oberfläche vorstellbar.

Unter Bezugnahme auf Fig. 1 ist im Vergleich zum ersten Ausführungsbeispiel lediglich eine Erfassungseinrichtung 2 erforderlich, welche eine Bedieneingabe des Benutzers erfasst und an eine zentrale Steuereinheit 3 für eine Ausführung des erfassten Befehls weiterleitet. Hierbei kann die Erfassungseinrichtung 2 analog zu dem bereits oben Gesagten ausgebildet und an den beispielhaft genannten Einbauorten vorgesehen werden. Vorzugsweise ist die Erfassungseinrichtung 2 in dem Kraftfahrzeug derart integriert, dass sie eine Bedieneingabe der zugeordneten fiktiven Bedienelemente sicher erfassen kann. Es können in einem Kraftfahrzeug auch mehrere Erfassungseinrichtungen vorgesehen sein, welche jeweils vorbestimmten Bedienelementen zugeordnet sind.

An diesem Ausführungsbeispiel hat sich die Tatsache als vorteilhaft herausgestellt, dass ein Aufbringen von graphisch dargestellten, fiktiven Bedienelementen auf einer zugeordneten Darstellungsfläche des Kraftfahrzeuges eine kostengünstige Realisierung von Bedienelementen darstellt, da auf physikalische Komponenten sowie deren aufwändiger und kostenintensiver Einbau verzichtet werden kann. Es muss lediglich eine Erfassungseinrichtung vorgesehen werden, welche eine virtuelle Betätigung der einzelnen aufgezeichneten fiktiven Bedienelemente erfasst und an die zentrale Steuereinheit sendet.

Obwohl die vorliegende Erfindung anhand bevorzugter Ausführungsbeispiele vorstehend beschrieben wurde, ist sie darauf nicht beschränkt, sondern auf vielfältige Weise modifizierbar.

### Bezugszeichenliste

- 1: Projektionseinrichtung
- 2: Erfassungseinrichtung
- 3: zentrale Steuereinheit
- 4: Projektionsfläche
- 5: Projektionsbild
- 6: Bildelement/Bedienelement
- 7: Dachkonsole
- 8: Armaturenbrett
- 9: Deckel des Handschuhfachs
- 10: Lenksäulenverkleidung
- 11: Mittelkonsole
- 12: Tunnelverkleidung
- 13: Sonnenblende
- 14: äußerer Dachrahmen
- 15: Dachhimmel

## Patentansprüche

1. Bediensystem zum Bedienen von Funktionen in einem Fahrzeug, mit:
einer Darstellungsfläche (4), welche in dem Fahrzeug vorgesehen ist;
einer Darstellungseinrichtung (1) zur graphischen Darstellung von den Funktionen zugeordneten, fiktiven Bedienelementen (6) auf der Darstellungsfläche (4);
einer Erfassungseinrichtung (2) zum Erfassen von Bedieneingaben bei einer Betätigung der fiktiven Bedienelemente (6); **gekennzeichnet durch**
eine zentrale Steuereinheit (3), welche für eine Darstellung der fiktiven Bedienelemente (6) in Abhängigkeit der erfassten Bedieneingaben mit der Erfassungseinrichtung (2) und der Darstellungseinrichtung (1) datenverbunden ist, den augenblicklichen Fahrzeugnutzer erkennt und die Darstellungseinrichtung (1) ferner für eine graphische Darstellung einer benutzerdefinierten Menüebene mit vorab ausgewählten fiktiven Bedienelementen (6) in Abhängigkeit des erkannten Fahrzeugnutzers ansteuert.

2. Bediensystem nach Anspruch 1, **dadurch gekennzeichnet, dass** die zentrale Steuereinheit den augenblicklichen Fahrzeugnutzer anhand eines Zündschlüssels erkennt.

3. Bediensystem nach Anspruch 1 oder 2, **dadurch gekennzeichnet, dass** die Darstellungseinrichtung (1) als Projektionseinrichtung (1) zum Projizieren der fiktiven Bedienelemente (6) auf die Darstellungsfläche (4) ausgebildet ist.

4. Bediensystem nach Anspruch 3, **dadurch gekennzeichnet, dass** die Projektionseinrichtung (1) als Laserprojektor, Durchlichtprojektor, Rückwandprojektor, Beamer bzw. Pico-Beamer, Head-up-Projektionseinrichtung, Helio-Display-Einrichtung, virtuelle Keyboardeinrichtung oder mobile Projektionseinrichtung ausgebildet ist.

5. Bediensystem nach einem der Ansprüche 3 oder 4, **dadurch gekennzeichnet, dass** die Projektionseinrichtung (1) neben den fiktiven Bedienelementen (6) weitere Bildelemente projiziert, wie z. B. Ist-Werte von vorbestimmten Fahrzeugsystemen, beispielsweise eines Sicherheitssystems, eines Infotainmentsystems oder eines Komfortsystems.

6. Bediensystem nach wenigstens einem der vorhergehenden Ansprüche, **dadurch gekennzeichnet, dass** die Darstellungsfläche (4) durch einen Festkörper ausgebildet ist.

7. Bediensystem nach wenigstens einem der vorhergehenden Ansprüche, **dadurch gekennzeichnet, dass** die Darstellungsfläche (4) durch einen flüssigen oder gasförmigen Stoff, beispielsweise durch einen vorbestimmten Luftbereich des Fahrzeugs ausgebildet ist, z. B. in einem freien Bereich vor der Mittelkonsole (11) oder der Windschutzscheibe.

8. Bediensystem nach wenigstens einem der Ansprüche 3 bis 7, **dadurch gekennzeichnet, dass** die fiktiven Bedienelemente (6) zumindest teilweise als veränderbare Bedienelemente (6) mit beispielsweise einer Menüebenenstruktur vorgesehen sind, wobei durch Betätigung eines vorbestimmten fiktiven Bedienelementes (6) die zentrale Steuereinheit (3) die Projektionseinrichtung (1) für eine graphische Darstellung einer dem betätigten Bedienelement (6) über- oder untergeordneten Menüebene ansteuert.

9. Bediensystem nach wenigstens einem der Ansprüche 3 bis 8, **dadurch gekennzeichnet, dass** die zentrale Steuereinheit (3) die Projektionseinrichtung (1) für eine graphische Darstellung von fiktiven Bedienelementen (6) in Abhängigkeit von bestimmten Fahrparametern ansteuert.

10. Bediensystem nach Anspruch 1, **dadurch gekennzeichnet, dass** die Darstellungseinrichtung (1) als mit den fiktiven Bedienelementen (6) versehene Darstellungsfläche (4) ausgebildet ist.

11. Bediensystem nach Anspruch 9, **dadurch gekennzeichnet, dass** die fiktiven Bedienelemente (6) auf der Darstellungsfläche (4) graphisch aufgedruckt, aufgezeichnet oder aufstrukturiert sind.

12. Bediensystem nach wenigstens einem der vorhergehenden Ansprüche, **dadurch gekennzeichnet, dass** die fiktiven Bedienelemente (6) unterschiedlichen Fahrzeugfunktionen zugeordnet sind, beispielsweise Sicherheitsfunktionen, Komfortfunktionen oder Infotainmentfunktionen.

13. Bediensystem nach wenigstens einem der vorhergehenden Ansprüche, **dadurch gekennzeichnet, dass** die Erfassungseinrichtung (2) eine Kamera aufweist, welche eine Betätigung der fiktiven Bedienelemente (6) optisch erfasst.

14. Bediensystem nach wenigstens einem der vorhergehenden Ansprüche, **dadurch gekennzeichnet, dass** die Erfassungseinrichtung (2) eine berührungsempfindliche Bedienfläche, beispielsweise einen Touchscreen, aufweist, welche eine Betätigung der projizierten Bedienelemente (6) mechanisch oder elektrisch erfasst.

15. Bediensystem nach wenigstens einem der vorhergehenden Ansprüche, **dadurch gekennzeichnet, dass** das Bediensystem bei einer Betätigung eines fiktiven Bedienelementes (6) eine akustische, haptische oder visuelle Rückmeldung generiert.

16. Fahrzeug mit einem Bediensystem, welches nach wenigstens einem der vorhergehenden Ansprüche ausgebildet ist.

## Claims

1. An operating system for operating functions in a vehicle, comprising:
a display area (4) which is provided in the vehicle;
a display device (1) for the graphic display on the display area of fictitious operator control elements (6) associated with the functions;
a detection device (2) for detecting operator inputs when actuating the fictitious operator control elements (6),
**characterized by** a central control unit (3) which is data-connected with the detection device (2) and the display device (1) for display the fictitious operator control elements (6) depending on the detected operator inputs, recognizes the current vehicle user and triggers the
display device (1) further for a graphic display of a user-defined menu level with previously selected fictitious control elements (6) depending on the recognized vehicle user.

2. An operating system according to claim 1, **characterized in that** the central control unit recognizes the current vehicle user through an ignition key.

3. An operating system according to claim 1 or 2, **characterized in that** the display device (1) is arranged as a projection device (1) for projecting the fictitious operator control elements (6) onto the display area (4).

4. An operating system according to claim 3, **characterized in that** the projection device (1) is arranged as a laser projector, transmissive projector, rear projector, beamer or pico-beamer, head-up projection device, heliodisplay device, virtual keyboard device or mobile projection device.

5. An operating system according to one of the claims 3 or 4, **characterized in that** the projection device (1) projects further image elements in addition to the fictitious operator control elements (6) such as actual values of predetermined vehicle systems such as a safety system, an infotainment system or a comfort system.

6. An operating system according to at least one of the preceding claims, **characterized in that** the display area (4) is formed by a solid body.

7. An operating system according to at least one of the preceding claims, **characterized in that** the display area (4) is formed by a fluid or gaseous substances, e.g. by a predetermined air area of the vehicle, e.g. in a free section in front of the central console (11) or the windscreen.

8. An operating system according to at least one of the claims 3 to 7, **characterized in that** the fictitious operator control elements (6) are provided at least partly as changeable operator control elements (6) with a menu level structure, with the central control unit (3), through actuation of a predetermined fictitious operator control element (6), triggering the projection device (1) for a graphical display of a menu level which is superordinate or subordinate to the actuated operator control element (6).

9. An operating system according to at least one of the claims 3 to 8, **characterized in that** the central control unit (3) triggers the projection device (1) for a graphical display of fictitious control elements (6) depending on certain driving parameters.

10. An operating system according to claim 1, **characterized in that** the display device (1) is arranged as a display area (4) provided with the fictitious control elements (6).

11. An operating system according to claim 9, **characterized in that** the fictitious operator control elements (6) are graphically printed, drawn or structured onto the same.

12. An operating system according to at least one of the preceding claims, **characterized in that** the fictitious operator control elements (6) are associated with different vehicle functions, e.g. safety functions, comfort functions or infotainment functions.

13. An operating system according to at least one of the preceding claims, **characterized in that** the detection device (2) comprises a camera which optically detects an actuation of the fictitious control elements (6).

14. An operating system according to at least one of the preceding claims, **characterized in that** the detection device (2) comprises a touch-sensitive operator control area, e.g. a touchscreen, which mechanically or electrically detects an actuation of the projected operator control elements (6).

15. An operating system according to at least one of the preceding claims, **characterized in that** the operating system generates an acoustic, haptic or visual confirmation upon actuation of a fictitious operator control element (6).

16. A vehicle with an operating system which is arranged according to at least one of the preceding claims.

## Revendications

1. Système de commande pour la commande de fonctions dans un véhicule, avec :
une surface d'affichage (4) prévue dans le véhicule ;
un dispositif d'affichage (1) pour l'affichage graphique d'éléments de commande virtuels (6) associés aux fonctions sur la surface d'affichage (4) ;
un dispositif de détection (2) pour la détection d'entrées de commande lors d'un actionnement des éléments
de commande virtuels (6) ;
**caractérisé en ce qu'**il comporte une unité de commande centrale (3) qui est reliée, en vue d'un affichage des éléments de commande virtuels (6) en fonction des entrées de commande détectées, avec le dispositif de détection (2) et le dispositif d'affichage (1), reconnaît l'utilisateur actuel du véhicule et active en outre le dispositif d'affichage (1) en vue d'un affichage graphique d'un niveau de menu défini par l'utilisateur avec des éléments de commande virtuels (6) choisis au préalable en fonction de l'utilisateur du véhicule reconnu.

2. Système de commande selon la revendication 1, **caractérisé en ce que** l'unité de commande centrale reconnaît l'utilisateur actuel du véhicule à l'aide d'une clé de contact.

3. Système de commande selon la revendication 1 ou 2, **caractérisé en ce que** le dispositif d'affichage (1) est conçu comme un dispositif de projection (1) pour la projection des éléments de commande virtuels (6) sur la surface d'affichage (4).

4. Système de commande selon la revendication 3, **caractérisé en ce que** le dispositif de projection (1) est conçu comme un projecteur laser, un projecteur par transparence, un rétroprojecteur, un projecteur vidéo ou un pico-projecteur, un dispositif de projection tête haute, un dispositif d'affichage holographique, un dispositif de clavier virtuel ou un dispositif de projection mobile.

5. Système de commande selon l'une des revendications 3 ou 4, **caractérisé en ce que** le dispositif de projection (1) projette, outre les éléments de commande virtuels (6), d'autres éléments d'image, par exemple des valeurs réelles de systèmes prédéterminés du véhicule, par exemple d'un système de sécurité, d'un système d'information-divertissement ou d'un système de confort.

6. Système de commande selon l'une au moins des revendications précédentes, **caractérisé en ce que** la surface d'affichage (4) est formée par un solide.

7. Système de commande selon l'une au moins des revendications précédentes, **caractérisé en ce que** la surface d'affichage (4) est formée par une matière liquide ou gazeuse, par exemple par une zone d'air prédéterminée dans le véhicule, par exemple dans une zone libre devant la console centrale (11) ou le pare-brise.

8. Système de commande selon l'une au moins des revendications 3 à 7, **caractérisé en ce que** les éléments de commande virtuels (6) sont prévus au moins partiellement pour être des éléments de commande modifiables (6) avec par exemple une structure par niveaux de menu, l'actionnement d'un élément de commande virtuel (6) prédéterminé entraînant l'activation par l'unité de commande centrale (3) du dispositif de projection (1) pour un affichage graphique d'un niveau de menu supérieur ou subordonné à l'élément de commande activé (6).

9. Système de commande selon l'une au moins des revendications 3 à 8, **caractérisé en ce que** l'unité de commande centrale (3) active le dispositif de projection (1) pour un affichage graphique d'éléments de commande virtuels (6) en fonction de certains paramètres de conduite.

10. Système de commande selon la revendication 1, **caractérisé en ce que** le dispositif d'affichage (1) est conçu comme une surface d'affichage (4) munie d'éléments de commande virtuels (6).

11. Système de commande selon la revendication 9, **caractérisé en ce que** les éléments de commande virtuels (6) sont imprimés, tracés ou structurés sous forme graphique sur la surface d'affichage (4).

12. Système de commande selon l'une au moins des revendications précédentes, **caractérisé en ce que** les éléments de commande virtuels (6) sont associés à différentes fonctions du véhicule, par exemple à des fonctions de sécurité, de confort ou d'information-divertissement.

13. Système de commande selon l'une au moins des revendications précédentes, **caractérisé en ce que** le dispositif de détection (2) comporte une caméra qui détecte de façon optique un actionnement des éléments de commande virtuels (6).

14. Système de commande selon l'une au moins des revendications précédentes, **caractérisé en ce que** le dispositif de détection (2) possède une surface de commande sensible au toucher, par exemple un écran tactile, qui détecte de façon mécanique ou électrique un actionnement des éléments de commande (6) projetés.

15. Système de commande selon l'une au moins des revendications précédentes, **caractérisé en ce que** le système de commande génère, en cas d'actionnement d'un élément de commande virtuel (6), un signal en retour sonore, haptique ou visuel.

16. Véhicule avec un système de commande conçu selon l'une au moins des revendications précédentes.
